# EUROPEAN PATENT SPECIFICATION

(11) **EP 2 760 252 B1**
(45) Date of publication and mention of the grant of the patent: **10.06.2015**
(21) Application number: 13152620.4
(22) Date of filing: 25.01.2013
(51) Int. Cl.: H05B 6/12

(54) **An induction module for an induction cooking hob**
Induktionsmodul für Induktionskochstelle
Module d'admission pour table de cuisson par induction

(43) Date of publication of application: 30.07.2014
(73) Proprietor: Electrolux Home Products Corporation N.V., 1130 Brussels (BE)
(72) Inventor: Neukamm, Alwin, 91541 Rothenburg ob der Tauber (DE); Hoffmann, Harald, 91541 Rothenburg ob der Tauber (DE); Leyh, Björn, 91541 Rothenburg ob der Tauber (DE); Häutle, Ulrich, 91541 Rothenburg ob der Tauber (DE)
(74) Representative: Baumgartl, Gerhard Willi

(56) References cited:
- EP-A1- 2 116 775
- EP-A2- 2 498 577
- DE-U1-202004 008 515
- FR-A1- 2 971 909

## Description

The present invention relates to induction module for an induction cooking hob according to the preamble of claim 1. Further, the present invention relates to an induction cooking hob comprising at least one induction module.

An induction cooking hob includes usually an induction coil carrier made of steel and a housing made of plastics. The induction coil carrier is provided for supporting one or more induction coils. The housing covers or encloses said induction coil or induction coils, respectively. The housing is usually fixed to the induction coil carrier by a plurality of screws.

However, the fixation of the housing to the induction coil carrier by the screws means a big expenditure and labour. This results in high costs for assembling the induction module and the associated induction cooking hob.

DE 20 2004 008 515 U1 discloses a cooking hob with induction and radiation heating elements arranged in a housing. The housing includes a wall at one side and side walls connected to a cooking panel. The cooking hob comprises a supporting device for receiving the induction heating element and two control modules, wherein one control module is provided for controlling the induction heating element, while the other control module is provided for controlling the radiation heating element.

EP 2 498 577 A2 discloses a cooking hob with a supporting plate and a cover element. The supporting plate is provided for receiving an electronic circuit. The cover element is detachably connected to the support plate by a horizontal snap-in mechanism.

FR 2 971 909 A1 discloses a cooking hob with an induction heating element. The induction heating element is arranged on a supporting plate. A casing with an open top side is attached below the supporting plate by pins extending down-wards from said supporting plate.

EP 2 116 775 A1 discloses a cooking hob attachable within a cutout of a worktop. At its outer portions the cooking hob comprises fastening elements with spring elements in order to clamp said cooking hob between the side walls of the cutout.

It is an object of the present invention to provide an induction module for an induction cooking hob, which allows an assembling of said induction module by low expenditure.

The object of the present invention is achieved by the induction module according to claim 1.

According to the present invention
- the induction coil carrier includes at least one vertical sheet element extending from the horizontal main panel,
- at least one cut-out is formed in the vertical sheet element, and
- the hook element and the corresponding cut-out form a snap-in mechanism for fixing the housing to the induction coil carrier, wherein
- the side wall of the housing is adjacent to the corresponding vertical sheet element of the induction coil carrier.

The induction module according to the present invention can be assembled by low expenditure. The housing with the side walls allows a protection of the induction coils at the side. The induction module can be assembled without any tools and screws.

According to a preferred embodiment of the present invention the induction coil carrier includes at least one protruding element extending downwards from the horizontal main panel of the induction coil carrier, wherein the at least one protruding element is provided for supporting the side wall of the housing.

Preferably, the at least one protruding element is made by a U-shaped die-cut in the horizontal main panel of the induction coil carrier and by subsequent bending up a tongue-shaped element resulting from said U-shaped die-cut.

Alternatively, the at least one protruding element is formed as a separate part fixed to the horizontal main panel of the induction coil carrier. In this case, the protruding element may be fixed to the induction coil carrier by rivets, welding, gluing or the like.

Further, the protruding elements may be provided for supporting two or more side walls of the housing.

Moreover, the housing may be additionally fixed to the induction coil carrier by at least one screw. This is advantageous for service reasons.

For example, the housing is fixable to the induction coil carrier by hanging up said housing at one side and clipping at one or more other sides.

Alternatively, the housing may be fixable to the induction coil carrier by clipping at all four sides.

In particular, at least one chamfer is formed at a lower edge of the vertical sheet element, so that the hook element can pass the lower edge of the vertical sheet element, when the housing is moved toward the induction coil carrier.

Furthermore, the open top side of the housing is covered by the horizontal main panel of the induction coil carrier.

Further, the present invention relates to an induction cooking hob comprising at least one induction module mentioned above.

Novel and inventive features of the present invention are set forth in the appended claims.

The present invention will be described in further detail with reference to the drawings, in which
- FIG 1: illustrates a schematic partial sectional side view of an induction module according to a preferred embodiment of the present invention,
- FIG 2: illustrates a schematic perspective view at the bottom side of the induction module according to the preferred embodiment of the present invention,
- FIG 3: illustrates a schematic detailed perspective view of the induction module according to the preferred embodiment of the present invention,
- FIG 4: illustrates a further schematic partial sectional side view of the induction module according to the preferred embodiment of the present invention,
- FIG 5: illustrates a schematic perspective view at the top side of the induction module according to the preferred embodiment of the present invention, and
- FIG 6: illustrates a schematic detailed perspective view of the induction module according to the preferred embodiment of the present invention.

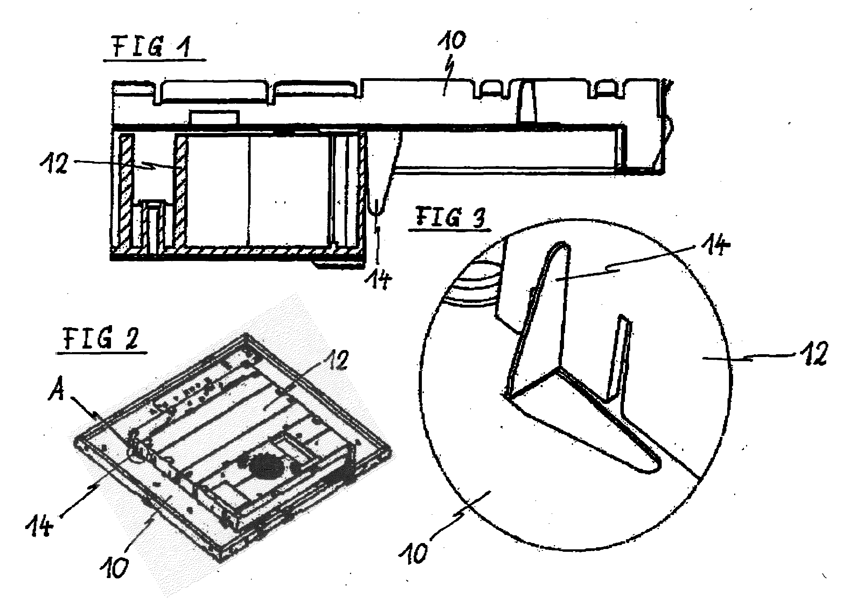

FIG 1 illustrates a schematic partial sectional side view of an induction module according to a preferred embodiment of the present invention.

The induction module comprises an induction coil carrier 10 and a housing 12. The housing 12 is fixed to the induction coil carrier 10. The induction coil carrier 10 is preferably made of steel, e.g. folded of a steel sheet. The housing 12 is preferably made of plastics. The induction coil carrier 10 is provided for supporting one or more induction coils. The housing 12 covers or encloses said induction coil or induction coils, respectively.

In particular, the induction coil carrier 10 includes one or more protruding elements 14. The protruding elements 14 extend downwards from a horizontal main panel of the induction coil carrier 10. The protruding elements 14 are provided for supporting the side walls of the housing 12.

In this example, the protruding element 14 is a bending up. The protruding element 14 is made by a U-shaped die-cut in the horizontal main panel of the induction coil carrier 10. Then the resulting tongue-shaped element is bended up and forms the protruding element 14. Alternatively, the protruding elements 14 may be separate parts fixed to the induction coil carrier 10. In the latter case, the protruding elements 14 may be fixed to the induction coil carrier 10 by rivets, welding, gluing or the like.

FIG 2 illustrates a schematic perspective view at the bottom side of the induction module according to the preferred embodiment of the present invention.

The housing 12 is fixed at the bottom side of the induction coil carrier 10. The housing 12 is flat and has a rectangular base area. The housing 12 includes a bottom wall and four side walls. The open top side of the housing 12 is covered by the horizontal main panel of the induction coil carrier 10. The area of said horizontal main panel of the induction coil carrier 10 is bigger than the base area of the housing 12.

FIG 3 illustrates a schematic detailed perspective view of the induction module according to the preferred embodiment of the present invention. Said detailed perspective view is an enlargement of the area A in FIG 2.

FIG 3 clarifies the geometric structure of the protruding element 14. Said protruding element 14 is the bending up from the horizontal main panel of the induction coil carrier 10. The protruding element 14 is made by the U-shaped die-cut in said main panel. The resulting tongue-shaped element has been bended up and forms the protruding element 14. The protruding element 14 supports the side wall of the housing 12.

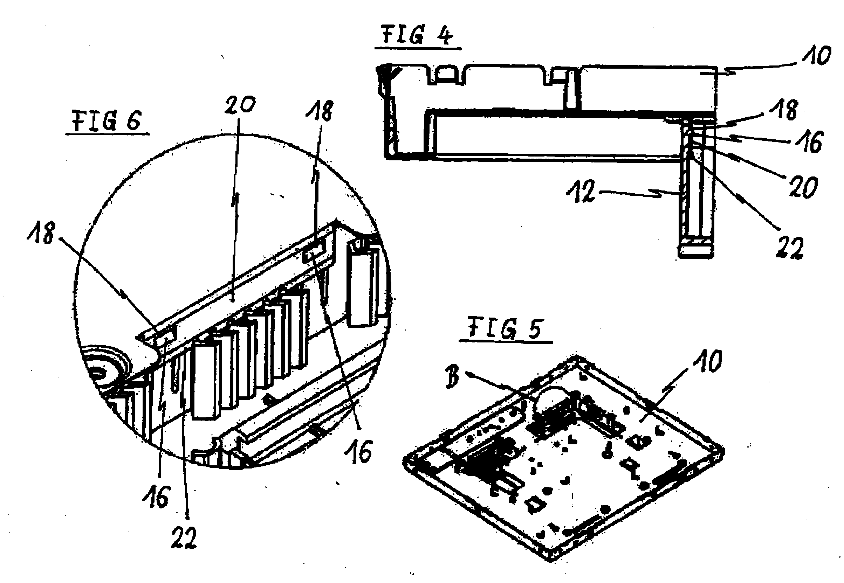

FIG 4 illustrates a further schematic partial sectional side view of the induction module according to the preferred embodiment of the present invention. Said further schematic sectional side view relates to another side wall of the housing 12 as in FIG 1.

The housing 12 is fixed to the induction coil carrier 10. The side wall of the housing 12 includes a hook element 16. The induction coil carrier 10 includes a vertical sheet element 20 adjacent to said side wall of the housing 12. The vertical sheet element 20 includes a cut-out 18 for receiving the hook element 16 of the housing 12. In FIG 4 the hook element 16 is received by the cut-out 18. The hook element 16 and the corresponding cut-out 18 form a snap-in mechanism for fixing the housing 12 to the induction coil carrier 10.

The induction module according to the present invention includes at least one hook element 16 and at least one coresponding cut-out 18. One or more side walls of the housing 12 include one or more hook elements 16. When assembling the induction module, the housing 12 can be hung-up at one side and clipped to the induction coil carrier 10 at one or more of the other sides. Alternatively, the housing 12 can be clipped to the induction coil carrier 10 at all four sides..

Further, the induction module according to the present invention includes one or more protruding elements 14 at two or more sides. The at least one hook element 16 and coresponding cut-out 18 as well as the protruding elements 14 allow the fixation of the housing 12 to the induction coil carrier 10 without any tools and screws.

In this example, a chamfer 22 is provided at the lower edge of the vertical sheet element 20. The chamfer 22 allows that the hook element 16 can easily pass the lower edge of the vertical sheet element 20, when the housing 12 is pushed towards the induction coil carrier 10.

FIG 5 illustrates a schematic perspective view at the top side of the induction module according to the preferred embodiment of the present invention. The housing 12 is fixed at the bottom side of the induction coil carrier 10 and is therefore not visible in FIG 5.

FIG 6 illustrates a schematic detailed perspective view of the induction module according to the preferred embodiment of the present invention. Said detailed perspective view is an enlargement of the area B in FIG 5.

The section shown in FIG 6 comprises two hook elements 16 and two corresponding cut-outs 18. Said hook elements 16 are formed at one side wall of the housing 12. The two cut-outs 18 are formed in one vertical sheet element 20 of the induction coil carrier 10. The hook elements 16 are received by the corresponding cut-outs 18. The chamfer 22 is provided at the lower edge of the vertical sheet element 20. The chamfer 22 allows that the hook element 16 can easily pass the lower edge of the vertical sheet element 20, when the housing 12 is pushed against the induction coil carrier 10.

Although an illustrative embodiment of the present invention has been described herein with reference to the accompanying drawings, it is to be understood that the present invention is not limited to that precise embodiment, and that various other changes and modifications may be affected therein by one skilled in the art without departing from the invention as defined by the appended claims.

### List of reference numerals

- 10: induction coil carrier
- 12: housing
- 14: protruding element
- 16: hook element
- 18: cut-out
- 20: vertical sheet element
- 22: chamfer

## Claims

1. An induction module for an induction cooking hob comprising an induction coil carrier (10) made of metal and a housing (12) made of plastics, wherein:
- the induction coil carrier (10) is provided for supporting at least one induction coil,
- the housing (12) is provided for covering and/or enclosing the at least one induction coil,
- the housing (12) is fixed or fixable to one side of the induction coil carrier (10),
- the housing (12) comprises a wall at one side, an open opposite side and one or more side walls between the wall at the one side and the open opposite side,
- at least one hook element (16) is formed at one or more side walls of the housing (12), and
- the induction coil carrier (10) includes a horizontal main panel,
**characterized in that**
- the induction coil carrier (10) includes at least one vertical sheet element (20) extending from the horizontal main panel,
- at least one cut-out (18) is formed in the vertical sheet element (20), and
- the hook element (16) and the corresponding cut-out (18) form a snap-in mechanism for fixing the housing (12) to the induction coil carrier (10), wherein
- the side wall of the housing (12) is adjacent to the corresponding vertical sheet element (20) of the induction coil carrier (10).

2. The induction module according to claim 1,
**characterized in that**
the induction coil carrier (10) includes at least one protruding element (14) extending downwards from the horizontal main panel of the induction coil carrier (10), wherein the at least one protruding element (14) is provided for supporting the side wall of the housing (12).

3. The induction module according to claim 2,
**characterized in that**
the at least one protruding element (14) is made by a U-shaped die-cut in the horizontal main panel of the induction coil carrier (10) and by subsequent bending up a tongue-shaped element resulting from said U-shaped die-cut.

4. The induction module according to claim 2,
**characterized in that**
the at least one protruding element (14) is formed as a separate part fixed to the horizontal main panel of the induction coil carrier (10).

5. The induction module according to claim 4,
**characterized in that**
the at least one protruding element (14) is fixed to the horizontal main panel of the induction coil carrier (10) by rivets, welding or gluing.

6. The induction module according to any one of the claims 2 to 5,
**characterized in that**
the protruding elements (14) are provided for supporting two or more side walls of the housing (12).

7. The induction module according to any one of the preceding claims,
**characterized in that**
the housing (12) is additionally fixed to the induction coil carrier (10) by at least one screw.

8. The induction module according to any one of the preceding claims,
**characterized in that**
the housing (12) is fixable to the induction coil carrier (10) by hanging up said housing (12) at one side and clipping at one or more other sides.

9. The induction module according to any one of the claims 1 to 7,
**characterized in that**
the housing (12) is fixable to the induction coil carrier (10) by clipping at all four sides.

10. The induction module according to any one of the preceding claims,
**characterized in that**
at least one chamfer (22) is formed at a lower edge of the vertical sheet element (20), so that the hook element (16) can pass the lower edge of the vertical sheet element (20), when the housing (12) is moved toward the induction coil carrier (10).

11. The induction module according to any one of the preceding claims,
**characterized in that**
the open top side of the housing (12) is covered by the horizontal main panel of the induction coil carrier (10).

12. An induction cooking hob comprising at least one induction module,
**characterized in that**
the induction cooking hob comprises at least one induction module according to any one of the claims 1 to 11.

## Patentansprüche

1. Induktionsmodul für ein Induktionskochfeld, das einen Induktionsspulenträger (10), der aus Metall hergestellt ist, und ein Gehäuse (12) umfasst, das aus Kunststoff hergestellt ist, wobei:
- der Induktionsspulenträger (10) zum Stützen von mindestens einer Induktionsspule vorgesehen ist,
- das Gehäuse (12) zum Abdecken und/oder Einschließen der mindestens einen Induktionsspule vorgesehen ist,
- das Gehäuse (12) an einer Seite des Induktionsspulenträgers (10) befestigt ist oder befestigt werden kann,
- das Gehäuse (12) eine Wand an einer Seite, eine offene gegenüberliegende Seite und eine oder mehrere Seitenwände zwischen der Wand an der einen Seite und der offenen gegenüberliegenden Seite umfasst,
- mindestens ein Hakenelement (16) an einer oder mehreren Seitenwänden des Gehäuses (12) gebildet ist, und
- der Induktionsspulenträger (10) ein horizontales Hauptpanel umfasst,
**dadurch gekennzeichnet, dass**
- der Induktionsspulenträger (10) mindestens ein vertikales Plattenelement (20) umfasst, das sich vom horizontalen Hauptpanel aus erstreckt,
- mindestens ein Ausschnitt (18) im vertikalen Plattenelement (20) gebildet ist, und
- das Hakenelement (16) und der entsprechende Ausschnitt (18) einen Rastmechanismus zum Fixieren des Gehäuses (12) am Induktionsspulenträger (10) bilden, wobei
- die Seitenwand des Gehäuses (12) an das entsprechende vertikale Plattenelement (20) des Induktionsspulenträgers (10) grenzt.

2. Induktionsmodul nach Anspruch 1, **dadurch gekennzeichnet, dass**
der Induktionsspulenträger (10) mindestens ein vorragendes Element (14) umfasst, das sich vom horizontalen Hauptpanel des Induktionsspulenträgers (10) aus nach unten erstreckt, wobei das mindestens eine vorragende Element (14) zum Stützen der Seitenwand des Gehäuses (12) vorgesehen ist.

3. Induktionsmodul nach Anspruch 2, **dadurch gekennzeichnet, dass**
das mindestens eine vorragende Element (14) durch eine U-förmige Stanzung im horizontalen Hauptpanel des Induktionsspulenträgers (10) und durch anschließendes Hochbiegen eines zungenförmigen Elementes hergestellt ist, welches aus der U-förmigen Stanzung resultiert.

4. Induktionsmodul nach Anspruch 2, **dadurch gekennzeichnet, dass**
das mindestens eine vorragende Element (14) als separates Teil gebildet ist, das am horizontalen Hauptpanel des Induktionsspulenträgers (10) befestigt ist.

5. Induktionsmodul nach Anspruch 4, **dadurch gekennzeichnet, dass**
das mindestens eine vorragende Element (14) am horizontalen Hauptpanel des Induktionsspulenträgers (10) durch Nieten, Schweißen oder Kleben befestigt ist.

6. Induktionsmodul nach einem der Ansprüche 2 bis 5, **dadurch gekennzeichnet, dass**
die vorragenden Elemente (14) zum Stützen von zwei oder mehr Seitenwänden des Gehäuses (12) vorgesehen sind.

7. Induktionsmodul nach einem der vorherigen Ansprüche,
**dadurch gekennzeichnet, dass**
das Gehäuse (12) zusätzlich am Induktionsspulenträger (10) durch mindestens eine Schraube befestigt ist.

8. Induktionsmodul nach einem der vorherigen Ansprüche,
**dadurch gekennzeichnet, dass**
das Gehäuse (12) am Induktionsspulenträger (10) durch Aufhängen des Gehäuses (12) an einer Seite und Festklammern an einer oder mehreren anderen Seiten befestigt werden kann.

9. Induktionsmodul nach einem der Ansprüche 1 bis 7,
**dadurch gekennzeichnet, dass**
das Gehäuse (12) am Induktionsspulenträger (10) durch Festklammern an allen vier Seiten befestigt werden kann.

10. Induktionsmodul nach einem der vorherigen Ansprüche,
**dadurch gekennzeichnet, dass**
mindestens eine Abschrägung (22) an einer unteren Kante des vertikalen Plattenelementes (20) gebildet ist, so dass das Hakenelement (16) an der unteren Kante des vertikalen Plattenelementes (20) vorbeigehen kann, wenn das Gehäuse (12) zum Induktionsspulenträger (10) hin bewegt wird.

11. Induktionsmodul nach einem der vorherigen Ansprüche,
**dadurch gekennzeichnet, dass**
die offene Oberseite des Gehäuses (12) durch das horizontale Hauptpanel des Induktionsspulenträgers (10) abgedeckt ist.

12. Induktionskochfeld, das mindestens ein Induktionsmodul umfasst,
**dadurch gekennzeichnet, dass**
das Induktionskochfeld mindestens ein Induktionsmodul nach einem der Ansprüche 1 bis 11 umfasst.

## Revendications

1. Module à induction pour une table de cuisson à induction comprenant un support de bobine d'induction (10) constitué de métal et un boîtier (12) constitué de plastique, dans lequel :
- le support de bobine d'induction (10) est prévu pour supporter au moins une bobine d'induction,
- le boîtier (12) est prévu pour recouvrir et/ou renfermer l'au moins une bobine d'induction,
- le boîtier (12) est fixé ou peut être fixé à un côté du support de bobine d'induction (10),
- le boîtier (12) comprend une paroi d'un côté, un côté opposé ouvert et une ou plusieurs parois latérales entre la paroi d'un côté et le côté opposé ouvert,
- au moins un élément formant crochet (16) est formé au niveau d'une ou plusieurs parois latérales du boîtier (12), et
- le support de bobine d'induction (10) comprend un panneau principal horizontal,
**caractérisé en ce que**
- le support de bobine d'induction (10) comprend au moins un élément vertical en tôle (20) s'étendant depuis le panneau principal horizontal,
- au moins une découpe (18) est formée dans l'élément vertical en tôle (20), et
- l'élément formant crochet (16) et la découpe (18) correspondante forment un mécanisme d'encliquetage pour fixer le boîtier (12) au support de bobine d'induction (10), où
- la paroi latérale du boîtier (12) est adjacente à l'élément vertical en tôle correspondant (20) du support de bobine d'induction (10).

2. Module à induction selon la revendication 1,
**caractérisé en ce que**
le support de bobine d'induction (10) comprend au moins un élément en saillie (14) s'étendant vers le bas à partir du panneau principal horizontal du support de bobine d'induction (10), où l'au moins un élément en saillie (14) est pourvu pour supporter la paroi latérale du boîtier (12).

3. Module à induction selon la revendication 2,
**caractérisé en ce que**
l'au moins un élément en saillie (14) est réalisé au moyen d'une découpe à l'emporte-pièce en forme de U dans le panneau principal horizontal du support de bobine d'induction (10) et par un pliage subséquent d'un élément en forme de languette résultant de ladite découpe à l'emporte-pièce en forme de U.

4. Module à induction selon la revendication 2,
**caractérisé en ce que**
l'au moins un élément en saillie (14) est formé comme une partie séparée fixée au panneau principal horizontal du support de bobine d'induction (10).

5. Module à induction selon la revendication 4,
**caractérisé en ce que**
l'au moins un élément en saillie (14) est fixé au panneau principal horizontal du support de bobine d'induction (10) par des rivets, par soudure ou par collage.

6. Module à induction selon l'une quelconque des revendications 2 à 5,
**caractérisé en ce que**
les éléments en saillie (14) sont prévus pour supporter deux ou plusieurs parois latérales du boîtier (12).

7. Module à induction selon l'une quelconque des revendications précédentes,
**caractérisé en ce que**
le boîtier (12) est en outre fixé sur le support de bobine d'induction (10) par au moins une vis.

8. Module à induction selon l'une quelconque des revendications précédentes,
**caractérisé en ce que**
le boîtier (12) peut être fixé au support de bobine d'induction (10) en accrochant ledit boîtier (12) d'un côté et en le fixant par encliquetage à un ou plusieurs autres côtés.

9. Module à induction selon l'une quelconque des revendications 1 à 7,
**caractérisé en ce que**
le boîtier (12) peut être fixé au support de bobine d'induction (10) par encliquetage sur les quatre côtés.

10. Module à induction selon l'une quelconque des revendications précédentes,
**caractérisé en ce que**
au moins un chanfrein (22) est formé au niveau d'un bord inférieur de l'élément vertical en tôle (20), de manière à ce que l'élément formant crochet (16) puisse passer le bord inférieur de l'élément vertical en tôle (20), lorsque le boîtier (12) est déplacé vers le support de bobine d'induction (10).

11. Module à induction selon l'une quelconque des revendications précédentes,
**caractérisé en ce que**
la face supérieure ouverte du boîtier (12) est recouverte par le panneau principal horizontal du support de bobine d'induction (10).

12. Plaque de cuisson à induction comprenant au moins un module à induction,
**caractérisée en ce que**
la plaque de cuisson à induction comprend au moins un module à induction selon l'une quelconque des revendications 1 à 11.
